# EUROPEAN PATENT SPECIFICATION

(11) **EP 2 569 843 B1**
(45) Date of publication and mention of the grant of the patent: **15.01.2014**
(21) Application number: 10722037.8
(22) Date of filing: 11.05.2010
(51) Int. Cl.: H02H 3/02, H02H 7/26, H02J 3/36

(54) **A PLANT FOR TRANSMITTING HIGH VOLTAGE DC ELECTRIC POWER INCLUDING OVERVOLTAGE PROTECTION**
ANLAGE ZUR ÜBERTRAGUNG VON HOCHSPANNUNGSGLEICHSTROM MIT ÜBERSPANNUNGSSCHUTZ
INSTALLATION POUR TRANSMETTRE DE L'ÉNERGIE ÉLECTRIQUE CC À HAUTE TENSION ET COMPRENANT UNE PROTECTION CONTRE LES SURTENSIONS

(43) Date of publication of application: 20.03.2013
(73) Proprietor: ABB Technology AG, 8050 Zürich (CH)
(72) Inventor: HÄFNER, Jurgen, S-771 42 Ludvika (SE); JACOBSON, Björn, S-772 40 Gängesberg (SE)
(74) Representative: Ahrengart, Kenneth
(86) International application number: PCT/EP2010/056463
(87) International publication number: WO 2011/141052

(56) References cited:
- WO-A1-2007/084034
- GB-A- 1 297 628
- GB-A- 2 133 939
- US-A- 4 142 230
- STEIMER P K ET AL: "IGCT-a new emerging technology for high power, low cost inverters", INDUSTRY APPLICATIONS CONFERENCE, 1997. THIRTY-SECOND IAS ANNUAL MEETI NG, IAS '97., CONFERENCE RECORD OF THE 1997 IEEE NEW ORLEANS, LA, USA 5-9 OCT. 1997, NEW YORK, NY, USA,IEEE, US, vol. 2, 5 October 1997 (1997-10-05), pages 1592-1599, XP010248533, DOI: DOI:10.1109/IAS.1997.629064 ISBN: 978-0-7803-4067-1

## Description

### FIELD OF THE INVENTION AND BACKGROUND ART

The present invention relates to a plant for transmitting electric power comprising
- a high voltage DC line,
- a DC breaker connected in series with said DC line and configured to break a fault current upon occurrence of a fault on said DC line,
- means configured to detect occurrence of a fault current as a consequence of a fault occurring at a location on the DC line,
- a control unit configured to control said DC breaker for protecting equipment connected to the DC line upon occurrence of a said fault current, and
- means configured to dissipate energy stored in a faulty current path of the DC line between said location and these means upon occurrence of a said fault to the moment of said control of said DC breaker.

High voltage means a voltage ≥ 10 kV and often a voltage of several hundreds kV with respect to ground.

The plant may be of any conceivable type used for transmitting electric power and having at least one high voltage DC line. An example of such a plant is a plant for transmitting electric power through High Voltage Direct Current, in which a DC line in the form of an overhead line or cable is used for transmitting electric power over long distances with losses being low compared to AC lines. It may also be any type of plant for transmitting electric power having a DC switchyard interconnecting a plurality of DC lines, which may form a DC grid or network possibly together with other such DC switchyards.

Said faults may for different reasons, such as strokes of lightning, arise and be a line-to-line or line-to-ground fault. It is then of great importance to be able to at a very short notice upon occurrence of such a fault limit a rapidly rising fault current resulting therefrom and also take care of the fault energy generated and stored in a said fault current path for preventing severe impacts upon equipment connected to the DC line.

Known are plants of this type having a said DC breaker comprising a switching element, such as a semiconductor switch, connected in series with said DC line and upon occurrence of a said fault controlled to switch to commutate the fault current into a said energy dissipating means in the form of an arrester bank connected in parallel with the switching element and having a protective level exceeding the voltage of said DC line with respect to ground. The arrester bank will then reduce the fault current to zero by dissipating the energy stored in the faulty current path. The fault energy to be taken care of by said arrester bank depends on the breaking current level, i.e. the level of the current at the moment of breaking the current through the DC breaker, and the location of the fault along said DC line by being proportional to the inductance L of the DC line between said location of the fault and the DC breaker. Thus, this energy could be much higher if the fault occurs at a location being far away, such as several hundreds of kilometres, from the DC breaker than for a fault occurring in the vicinity of the DC breaker. Thus, the required size of the arrester bank is difficult to estimate, in particular for such a plant having a complex DC grid, and overrating is required to cover worse case conditions. This means that large arrester banks designed to take care of energy in the range of several MJ to several tens of MJ need to be applied for high voltage DC grid breakers. Furthermore, the arrester bank may only be exposed to a limited number of operations for a given nominal energy dissipation. Thus, to ensure functionality and to reduce costs and size of the arrester bank, the required energy dissipation of the arrester bank during a breaking instance should be kept as low as possible.

### SUMMARY OF THE INVENTION

The object of the present invention is to provide a plant of the type defined in the introduction being in at least some aspect improved with respect to such plants already known.

This object is according to the invention obtained by providing such a plant in which said energy dissipating means comprises a series connection of an energy consuming braking resistor and a free-wheeling rectifying member connected between ground and said DC line to conduct current while forming a free-wheeling path therethrough and in said faulty current path between ground and said location upon said control of said DC breaker upon occurrence of a said fault.

The arrangement of such a free-wheeling path for energy dissipation in a said resistor results in a possibility to considerably reduce the costs for said energy dissipating means. Such a braking resistor for consuming a certain amount of energy in a certain period of time is less costly than a corresponding arrester bank. The presence of such a braking resistor means that energy dissipating means in the form of an arrester bank in connection with the DC breaker may be reduced in size and by that costs be saved. Furthermore, such an arrester bank does not have to be overrated any longer, since the energy to be taken care of thereby will thanks to the existence of the braking resistor be well defined, since the location of a said fault along the DC line will only impact the requirements of the energy dissipating capability of the braking resistor, which will remove the inductance of the line to be taken care of by any arrester bank. This means in the practice that for many applications any arrester bank of a DC breaker of such a plant may be there only for current limitation and not for consuming energy.

The arrangement of said series connection of an energy consuming braking resistor and a free-wheeling rectifying member also opens up for a faster disconnection of the faulty DC line from the rest of the plant by said DC breaker and thus less impact of DC line faults on other parts of the plant.

According to an embodiment of the invention said rectifying member comprises a high voltage diode connecting the braking resistor to said DC line, and the rectifying member comprises preferably a series connection of such high voltage diodes to together block a reverse voltage thereacross exceeding the intended voltage on said DC line with respect to ground, and a high number of such diodes connected in series will be necessary when said voltage is as high as 100 kV or even higher.

According to another embodiment of the invention said DC breaker comprises a semiconductor device of turn-off type, and a said control unit is configured, upon occurrence of a said fault, to turn said semiconductor device off for commutating said fault current into said free-wheeling path. Examples of such a semiconductor device is an IGBT (Insulated Gate Bipolar Transistor), a GTO (Gate Turn-Off thyristor) or an IGCT (Insulated Gate Commutated Thyristor).

According to another embodiment of the invention the plant comprises a current limiting arrangement arranged close to said DC breaker for limiting the current through said DC breaker upon occurrence of a said fault, which will reduce the breaking current level and by that the fault energy to be dissipated and by that the required dimension and costs of the energy dissipating means.

According to another embodiment of the invention said current limiting arrangement comprises an arrester connected in parallel with said semiconductor device, and this arrangement may also comprise a current derivative limiting reactor connected in series with said DC breaker, which means that the rise of the fault current to said breaking current level will be smaller.

According to another embodiment of the invention the plant comprises a DC switchyard comprising at least one busbar and at least two said DC lines each connected to said at least one busbar through a said DC breaker, and at least one of said DC lines has a said series connection of an energy consuming braking resistor and a free-wheeling rectifying member connected thereto. The invention is particularly interesting for a plant including such a DC switchyard, since it is particularly difficult to estimate the size required of an arrester bank in known such plants including such a DC switchyard in complex DC grids.

According to another embodiment of the invention said series connection of an energy consuming braking resistor and a freewheeling rectifying member is connected to said DC line in connection with said DC switchyard, such as at the DC line entrance thereof. This means that the braking resistor will take care of substantially the entire inductance between a said fault location and the DC breaker, since it will be arranged in the vicinity of the DC breaker.

According to another embodiment of the invention the plant comprises a said series connection of an energy consuming braking resistor and a free-wheeling rectifying member for each of said DC lines connected to said DC switchyard. This provides for cost efficient protection against faults occurring on all DC lines connected to the DC switchyard.

According to another embodiment of the invention the plant comprises a station for converting alternating voltage into direct voltage and conversely, said station is provided with a said DC breaker, and a said series connection of an energy consuming braking resistor and a free-wheeling rectifying member is connected to a DC line connected to the DC side of said station close to or in direct connection with said station.

The plant may be a plant for transmitting electric power through High Voltage Direct Current.

According to another embodiment of the invention said DC line is configured to be on a voltage level of ≥ 10 kV, 10 kV - 1000 kV, 100 kV - 1000 kV or 300 kV - 1000 kV with respect to ground. The arrangement of said energy consuming braking resistor and a free-wheeling rectifying member as energy dissipating means is the more interesting the higher said voltage level is in view of costs to be saved thereby.

Further advantages as well as advantageous features of the invention will appear from the following description.

### BRIEF DESCRIPTION OF THE DRAWINGS

With reference to the appended drawings, below follows a specific description of embodiments of the invention cited as examples.

In the drawings:
- Fig 1: is a schematical view of a DC switchyard having known means configured to dissipate energy stored in a faulty current path of DC lines connected thereto,

- Fig 2: is a view similar to Fig 1 of a plant according to a first embodiment of the invention, and
- Fig 3: is a schematical view of a part of a plant according to a second embodiment of the invention.

### DETAILED DESCRIPTION OF EMBODIMENTS OF THE INVENTION

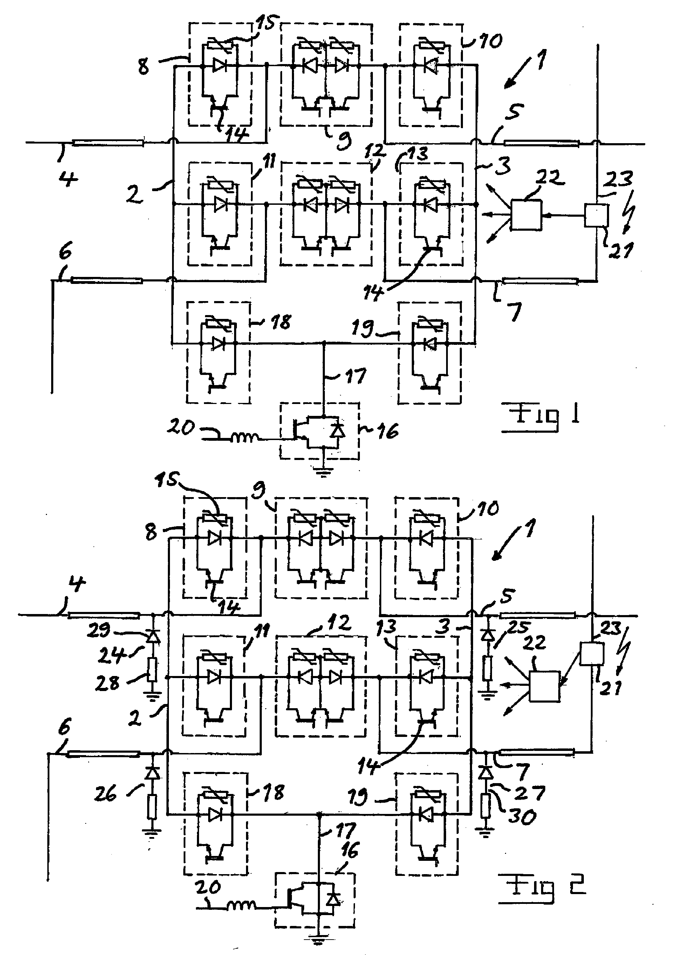

Fig 1 illustrates a plant for transmitting electric power having a DC switchyard to which the present invention may be applied, which will be described further below with reference made to Fig 2. This DC switchyard 1 comprises two busbars 2, 3, four DC lines 4-7 connected to each of these busbars through DC breakers 8-13 comprising semiconductor devices 14 of turn-off type, such as IGBT:s, and an arrester bank 15 connected in parallel therewith. It is also shown how this DC switchyard may have an AC/DC converter 16, such as a Voltage Source Converter, connected with a DC-side 17 thereof through DC breakers 18, 19 to the two busbars 2, 3. The alternating voltage side 20 of the converter may be connected to for instance an alternating voltage network or an electric power generator of for instance a wind power plant.

The plant also comprises means 21 configured to detect occurrence of a fault current as a consequence of a fault occurring at a location on any of the DC lines as well as a control unit 22 configured to control a corresponding of the DC breakers for protecting equipment connected to the DC line in question upon occurrence of a said fault current.

The function of this plant upon occurrence of a fault will now be explained. We assume that a fault, such as a line-to-ground or a line-to-line fault occurs at a location 23 on the DC line 7. This fault will be detected by the means 21 and the control unit 22 will control the semiconductor devices 14 of the DC breakers 12 and 13 to open for commutating the fault current into the corresponding arrester bank paths of these DC breakers 12, 13. These arrester banks will reduce the fault current to zero by dissipating the energy stored in the faulty current path between the location 23 and the DC breakers, and this energy will depend upon the distance between said location and the DC breakers and the level of the breaking current.

Fig 2 illustrates a plant according to an embodiment of the present invention being almost identical to the plant shown in Fig 1, but to which a series connection 24-27 of an energy consuming braking resistor 28 and a free-wheeling rectifying member 29 in the form of a rectifying diode, have been connected between ground and each said DC line 4-7 at the DC line entrance of the DC switchyard. The rectifying member 29 is configured to be able to block a reverse voltage thereacross exceeding the maximum voltage on the DC line during transients at the point of connecting with respect to ground, which typically means a voltage blocking capability exceeding 1.8 times the nominal DC voltage, and may for that sake comprise a plurality of such high voltage diodes connected in series. The size of the arrester banks of the plant shown in Fig 2 may also be considerably reduced with respect to Fig 1, since these arrester banks may here primarily be arranged for current limiting purposes.

The braking resistors 28 are suitably dimensioned for being able to dissipate the maximum fault energy created by a DC line fault occurring at a location far away from said DC switchyard and may for that sake have a considerable size, such as of a shed, and is preferably of stainless steel. For overvoltage protections arresters may be connected in parallel with the rectifying members and/or the braking resistors.

The operation of such a plant in the case of a DC line fault will be as follows. We assume that a DC line fault occurs at the location 23, in which the control unit 22 controls the corresponding DC breakers 12, 13 connected to the faulty line 7 to open and thus forcing the fault current to commutate into the freewheeling path 30 formed by the series connection 27 of the braking resistor 28 and the free-wheeling diodes 29. The braking resistor will then dissipate the remaining fault energy stored in the DC line 7 between the location 23 and the connection of the free-wheeling path upon occurrence of a said fault to the moment of said control of the DC breakers. This will reduce the fault current to zero.

Robust energy consuming resistors with large dynamic surge current capability are available on the market to a price being very attractive with respect to the costs possible to save by reducing the size of said arrester banks. Forced cooling of the series connection of diodes is not required due to the relative short conducting time of typically less then 100 ms during a fault. Thus, realizing the free-wheeling path is simple, even outdoor installation is possible.

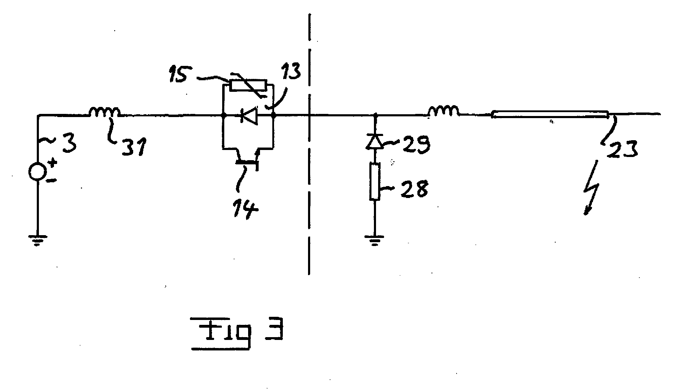

A plant according to a second embodiment of the invention is very schematically illustrated in Fig 3. In this plant a current derivative limiting reactor 31 connects the DC breaker 13 to the busbar 3. Assuming a high DC voltage at the busbar 3 of the DC switchyard, the required energy dissipation capability of the DC breaker, i.e. the arrester bank 15 thereof, depends only on the maximum breaking current level and the current derivative limiting reactor, e.g. used to improve selectivity of protection. The size of such current derivative limiting reactors installed in the DC lines as well as the location 23 of the fault will only impact the requirements on the energy dissipating capability of the braking resistor 28, which is the less costly part of the equipment.

The invention is of course not in any way restricted to the embodiments described above, but many possibilities to modifications thereof will be apparent to a person with ordinary skill in the art without departing from the scope of the invention as defined in the appended claims.

The invention is applicable to DC switchyards of other types than shown in the figures, such as so-called two breaker switchyards having two separate breakers for connecting each DC line to a busbar and switchyards having only one busbar in the form of a DC grid node to which at least three DC lines are connected through a said DC breaker each.

## Claims

1. A plant for transmitting electric power comprising
• a high voltage DC line (4-7),
• a DC breaker (8-13) connected in series with said DC line and configured to break a fault current upon occurrence of a fault on said DC line,
• means (21) configured to detect occurrence of a fault current as a consequence of a fault occurring at a location (23) on the DC line,
• a control unit (22) configured to control said DC breaker for protecting equipment connected to the DC line upon occurrence of a said fault current, and
• means configured to dissipate energy stored in a faulty current path of the DC line between said location and these means upon occurrence of a said fault to the moment of said control of said DC breaker,
**characterized in that**
said energy dissipating means comprises a series connection (24-27) of an energy consuming braking resistor (28) and a freewheeling rectifying member (29) connected between ground and said DC line to conduct current while forming a free-wheeling path (30) therethrough and in said faulty current path between ground and said location (23) upon said control of said DC breaker upon occurrence of a said fault,
said DC breaker (8-13) comprises a semiconductor device (14) of turn-off type with current limiting arrangement comprising an arrester (15) connected in parallel with said semiconductor device (14) for limiting the current through said DC breaker upon occurrence of a said fault, and
said control unit (22) is configured, upon occurrence of a said fault, to turn said semiconductor device off for commutating said fault current into said free-wheeling path (30).

2. A plant according to claim 1, **characterized in that** said rectifying member comprises a high voltage diode (29) connecting the braking resistor (28) to said DC line.

3. A plant according to claim 2, **characterized in that** said rectifying member comprises a series connection of a plurality of said high voltage diodes (29) able to together block a reverse voltage thereacross exceeding the intended voltage on said DC line with (4-7) respect to ground.

4. A plant according to any previous claim, **characterized in that** said semiconductor device is an IGBT, a GTO or an IGCT.

5. A plant according to any previous claim, **characterized in that** said current limiting arrangement comprises a current derivative limiting reactor (31) connected in series with said DC breaker (13).

6. A plant according to any of the preceding claims, **characterized in that** it comprises a DC switchyard (1) comprising at least one busbar (2, 3) and at least two said DC lines (4-7) each connected to said at least one busbar through a said DC breaker (8-13), and that at least one of said DC lines has a said series connection of an energy consuming braking resistor (28) and a free-wheeling rectifying member (29) connected thereto.

7. A plant according to claim 6, **characterized in that** said series connection of an energy consuming braking resistor (28) and a free-wheeling rectifying member (29) is connected to said DC line in connection with said DC switchyard (1, such as at the DC line entrance thereof.

8. A plant according to claim 6 or 7, **characterized in that** it comprises a said series connection of an energy consuming braking resistor (28) and a free-wheeling rectifying member (29) for each of said DC lines (4-7) connected to said DC switchyard (1).

9. A plant according to any of the preceding claims, **characterized in that** it comprises a station for converting alternating voltage into direct voltage and conversely, that said station is provided with a said DC breaker, and that a said series connection of an energy consuming braking resistor (28) and a freewheeling rectifying member (29) is connected to a DC line connected to the DC-side (17) of said station close to or in direct connection with said station.

10. A plant according to any of the preceding claims, **characterized in that** it is a plant for transmitting electric power through High Voltage Direct Current.

11. A plant according to any of the preceding claims, **characterized in that** said DC line (4-7) is configured to be on a voltage level of ≥ 10 kV - 100 kV, 10 kV - 1000 kV, 100 kV - 1000 kV or 300 kV - 1000 kV with respect to ground.

## Patentansprüche

1. Anlage zum Übertragen elektrischer Leistung, die Folgendes umfasst:
- eine Hochspannungs-Gleichstromleitung (4-7),
- einen Gleichstromunterbrecher (8-13), der mit der Gleichstromleitung in Reihe geschaltet ist und konfiguriert ist, einen Fehlerstrom bei Auftreten eines Fehlers in der Gleichstromleitung zu unterbrechen;
- Mittel (21), die konfiguriert sind, das Auftreten eines Fehlerstroms als Folge eines Fehlers, der an einem Ort (23) in der Gleichstromleitung auftritt, zu detektieren;
- eine Steuereinheit (22), die konfiguriert ist, den Gleichstromunterbrecher zu steuern, um eine mit der Gleichstromleitung verbundene Ausrüstung bei Auftreten des Fehlerstroms zu schützen, und
- Mittel, die konfiguriert sind, Energie, die in einem Fehlerstromweg der Gleichstromleitung zwischen dem Ort und diesen Mitteln gespeichert ist, bei Auftreten des Fehlers bis zu dem Zeitpunkt der Steuerung des Gleichstromunterbrechers abzuführen,
**dadurch gekennzeichnet, dass**
die Energieabführmittel eine Reihenschaltung (24-27) aus einem Energie verbrauchenden Bremswiderstand (28) und einem Umpolungsgleichrichterelement (29), das zwischen Masse und die Gleichstromleitung geschaltet ist, um Strom zu leiten, während ein Umpolungsweg (30) hindurch und in dem Fehlerstromweg zwischen Masse und dem Ort (23) bei Steuerung des Gleichstromunterbrechers bei Auftreten des Fehlers gebildet wird, umfassen,
wobei der Gleichstromunterbrecher (8-13) eine Halbleitervorrichtung (14) des Abschalttyps mit Strombegrenzungsanordnung umfasst, die einen Kurzschließer (15) umfasst, der zu der Halbleitervorrichtung (14) parallel geschaltet ist, um den Strom durch den Gleichstromunterbrecher bei Auftreten des Fehlers zu begrenzen, und
die Steuereinheit (22) konfiguriert ist, bei Auftreten des Fehlers die Halbleitervorrichtung zu sperren, um den Fehlerstrom in den Umpolungsweg (30) umzuschalten.

2. Anlage nach Anspruch 1, **dadurch gekennzeichnet, dass** das Gleichrichterelement eine Hochspannungsdiode (29) umfasst, die den Bremswiderstand (28) mit der Gleichstromleitung verbindet.

3. Anlage nach Anspruch 2, **dadurch gekennzeichnet, dass** das Gleichrichterelement eine Reihenschaltung aus mehreren Hochspannungsdioden (29) umfasst, die eine Sperrspannung über den Dioden, die die Sollspannung in der Gleichstromleitung (4-7) in Bezug auf Masse übersteigt, blockieren.

4. Anlage nach einem vorhergehenden Anspruch, **dadurch gekennzeichnet, dass** die Halbleitervorrichtung ein IGBT, ein GTO oder ein IGCT ist.

5. Anlage nach einem vorhergehenden Anspruch, **dadurch gekennzeichnet, dass** die Strombegrenzungsanordnung einen Stromableitungsbegrenzungsreaktor (31), der mit dem Gleichstromunterbrecher (13) in Reihe geschaltet ist, umfasst.

6. Anlage nach einem der vorhergehenden Ansprüche, **dadurch gekennzeichnet, dass** sie eine Gleichstrom-Freiluftschaltanlage (1) umfasst, die wenigstens eine Busschiene (2, 3) und wenigstens zwei der Gleichstromleitungen (4-7), wovon jede mit der wenigstens einen Busschiene über den Gleichstromunterbrecher (8-13) verbunden ist, umfasst, und dass wenigstens eine der Gleichstromleitungen eine Reihenschaltung aus einem Energie verbrauchenden Bremswiderstand (28) und einem Umpolungsgleichrichterelement (29), das daran angeschlossen ist, besitzt.

7. Anlage nach Anspruch 6, **dadurch gekennzeichnet, dass** die Reihenschaltung aus einem Energie verbrauchenden Bremswiderstand (28) und einem Umpolungsgleichrichterelement (29) mit der Gleichstromleitung in Verbindung mit der Gleichstrom-Freiluftschaltanlage (1), etwa bei dem Gleichstromeingang hiervon, verbunden ist.

8. Anlage nach Anspruch 6 oder 7, **dadurch gekennzeichnet, dass** sie eine Reihenschaltung aus einem Energie verbrauchenden Bremswiderstand (28) und einem Umpolungsgleichrichterelement (29) für jede der Gleichstromleitungen (4-7), die mit der Gleichstrom-Freiluftschaltanlage (1) verbunden sind, umfasst.

9. Anlage nach einem der vorhergehenden Ansprüche, **dadurch gekennzeichnet, dass** sie eine Station zum Umsetzen einer Wechselspannung in eine Gleichspannung und umgekehrt umfasst, dass die Station mit dem Gleichstromunterbrecher versehen ist und dass eine Reihenschaltung aus einem Energie verbrauchenden Bremswiderstand (28) und einem Umpolungsgleichrichterelement (29) mit einer Gleichstromleitung verbunden ist, die mit der Gleichstromseite (17) der Station in der Nähe der Station oder in direkter Verbindung mit der Station verbunden ist.

10. Anlage nach einem der vorhergehenden Ansprüche, **dadurch gekennzeichnet, dass** sie eine Anlage zum Übertragen elektrischer Leistung über einen Hochspannungs-Gleichstrom ist.

11. Anlage nach einem der vorhergehenden Ansprüche, **dadurch gekennzeichnet, dass** die Gleichstromleitung (4-7) für einen Spannungspegel ≥10 kV-100 kV, 10 kV-1000 kV, 100 kV-1000 kV oder 300 kV-1000 kV in Bezug auf Masse konfiguriert ist.

## Revendications

1. Installation pour transmettre de l'électricité, comprenant :
- une ligne CC haute tension (4-7) ;
- un rupteur CC (8-13) connecté en série à ladite ligne CC et conçu pour interrompre un courant de défaut dans le cas d'une panne sur ladite ligne CC ;
- un moyen (21) conçu pour détecter l'occurrence d'un courant de défaut suite à une panne survenant en un emplacement (23) sur la ligne CC ;
- une unité de commande (22) conçue pour commander ledit rupteur CC afin de protéger un équipement connecté à la ligne CC lors de l'occurrence dudit courant de défaut ; et
- des moyens conçus pour dissiper l'énergie stockée dans un trajet de courant défaillant de la ligne CC entre ledit emplacement et ces moyens lors de l'occurrence de ladite panne au moment de ladite commande dudit rupteur CC ;
**caractérisée en ce que** :
- lesdits moyens de dissipation d'énergie comprennent une connexion série (24-27) d'une résistance de freinage de consommation d'énergie (28) et un élément redresseur en roue libre (29) connecté entre la terre et ladite ligne CC afin de conduire le courant tout en formant un trajet en roue libre (30) dans celui-ci et dans ledit trajet de courant défaillant entre la terre et ledit emplacement (23) lors de ladite commande dudit rupteur CC lors de l'occurrence de ladite panne ;
- ledit rupteur CC (8-13) comprend un dispositif à semi-conducteur (14) de type arrêt avec un système de limitation de courant comprenant un isolateur (15) connecté en parallèle audit dispositif à semi-conducteur (14) afin de limiter le courant dans ledit rupteur CC lors de l'occurrence de ladite panne ; et
- ladite unité de commande (22) est conçue, lors de l'occurrence de ladite panne, pour arrêter ledit dispositif à semi-conducteur afin de commuter ledit courant de défaut dans ledit trajet en roue libre (30).

2. Installation selon la revendication 1, **caractérisée en ce que** ledit élément redresseur comprend une diode haute tension (29) connectant la résistance de freinage (28) à ladite ligne CC.

3. Installation selon la revendication 2, **caractérisée en ce que** ledit élément redresseur comprend une connexion série de plusieurs desdites diodes haute tension (29) qui permettent ensemble de bloquer une tension inverse dans celui-ci dépassant la tension cible sur ladite ligne CC (4-7) par rapport à la terre.

4. Installation selon l'une quelconque des revendications précédentes, **caractérisée en ce que** ledit dispositif à semi-conducteur est un IGBT, un GTO ou un IGCT.

5. Installation selon l'une quelconque des revendications précédentes, **caractérisée en ce que** ledit système de limitation de courant comprend un réacteur de limitation dérivative de courant (31) connecté en série avec ledit rupteur CC (13).

6. Installation selon l'une quelconque des revendications précédentes, **caractérisée en ce qu'**elle comprend un poste d'interconnexion CC (1) comprenant au moins une barre omnibus (2, 3) et au moins deux lignes CC (4-7) chacune connectée à ladite au moins une barre omnibus via ledit rupteur CC (8-13), et **en ce que** l'une au moins desdites lignes CC comprend une connexion série d'une résistance de freinage de consommation d'énergie (28) et d'un élément redresseur en roue libre (29) connectée à celle-ci.

7. Installation selon la revendication 6, **caractérisée en ce que** ladite connexion série d'une résistance de freinage de consommation d'énergie (28) et d'un élément redresseur en roue libre (29) est connectée à ladite ligne CC en connexion avec ledit poste d'interconnexion CC (1), par exemple à l'entrée de la ligne CC de celui-ci.

8. Installation selon les revendications 6 ou 7, **caractérisée en ce qu'**elle comprend ladite connexion série d'une résistance de freinage de consommation d'énergie (28) et d'un élément redresseur en roue libre (29) pour chacune desdites lignes CC (4-7) connectées audit poste d'interconnexion CC (1).

9. Installation selon l'une quelconque des revendications précédentes, **caractérisée en ce qu'**elle comprend une station pour convertir une tension alternative en une tension continue et inversement, **en ce que** ladite station comprend un rupteur CC, et **en ce que** la connexion série d'une résistance de freinage de consommation d'énergie (28) et d'un élément redresseur en roue libre (29) est connectée à une ligne CC connectée au côté CC (17) de ladite station à proximité de ou en connexion directe avec ladite station.

10. Installation selon l'une quelconque des revendications précédentes, **caractérisée en ce qu'**elle consiste en une installation de transmission d'électricité en courant continu haute tension.

11. Installation selon l'une quelconque des revendications précédentes, **caractérisée en ce que** ladite ligne CC (4-7) est conçue pour être à un niveau de tension ≥ 10 kV-100 kV, 10 kV-1000 kV, 100 kV-1000 kV, ou 300 kV-1000 kV par rapport à la terre.
